Europäisches Patentamt

**European Patent Office**

**Office européen des brevets**

(11) Publication number: **0 057 581**
**A2**

## (12) EUROPEAN PATENT APPLICATION

(21) Application number: **82300456.9**

(22) Date of filing: **28.01.82**

(51) Int. Cl.³: **F 16 K 31/365,** F 16 K 31/42,
G 05 D 16/20

(30) Priority: **02.02.81 US 230426**

(43) Date of publication of application: **11.08.82**
**Bulletin 82/32**

(84) Designated Contracting States: **DE FR GB IT**

(71) Applicant: **GROVE VALVE AND REGULATOR
COMPANY, 6529 Hollis Street, Oakland
California 94608 (US)**

(72) Inventor: **Connolly, Walter 133 Danefield Place, Moraga
California 94556, US (US)**

(74) Representative: **Williams, Trevor John et al, J.A. KEMP &
CO. 14 South Square Gray's Inn, London WC1R 5EU (GB)**

(54) Method of and system for controlling pressure responsive regulator valve.

(57) A method of and system for controlling a pipeline fluid parameter, including a main control valve (12) which is conditioned to open when upstream pressure ($P_1$) therein overcomes pressure ($P_j$) in a chamber (32) therein. The chamber is connected by load and bleed lines (34, 38) to a source of pressure and a low pressure zone, respectively, and normally closed control valves (40, 46) are provided in each of the lines. The valves (40, 46) are openable by solenoids in response to signals (40A, 44A) transduced from a fluid parameter for precise periods of time so that the valve chamber (32) is loaded or bled by small discrete volumetric increments of pressure fluid.

- 1 -

DESCRIPTION

"METHOD OF AND SYSTEM FOR CONTROLLING PRESSURE-RESPONSIVE
REGULATOR VALVE"

This invention relates to a method of and a control system for controlling a fluid flow control valve in a pipeline.

Valves of the type which open when pressure in the upstream passage overcomes pressure in a jacket, e.g. expansible tube valves, are commonly operated by a pilot valve to control fluid characteristics, such as pressure, flow rate and the like. In operation, the jacket pressure is usually maintained within a range to enable continuous flow through the valve at a rate to maintain the desired value of the flow characteristic being monitored. A sensing chamber in the pilot valve is connected to the pipeline where the fluid parameter is being monitored so that bleeding of the valve jacket pressure is increased or decreased to adjust flow as needed to maintain the desired level of the fluid parameter. A common problem in natural gas service is the tendency of the gas to freeze at the pilot outlet as it is bled from the jacket to expand in a zone of low pressure. In natural gas service, there is the problem of environmental contamination, as well as fire hazard, when bleeding to the atmosphere. As a result, some environmental protection standards impose the requirement that that gas bled from the valve jacket be confined. One obvious chamber for so confining the gas bled is the pipeline itself, downstream of the control valve. However, this of course places a bottom limit on the jacket pressure at the level of downstream pressure which provides an added resistance to the expansion of the tube and, hence, imposes a limitation on the flow capacity of the control valve. This limitation may be a severe disadvantage in natural gas service, particularly at peak demand periods when it is highly desirable to utilize maximum valve capacity. This limitation could be overcome by providing a low pressure reservoir, but it would require a reservoir of considerable volume to accommodate the amount of gas flowing through a continuously bleeding system.

It is an object of this invention to provide a flow control system which is extremely stable and which will permit very sensitive throttling.

It is a further object of this invention to provide a fluid control system for a natural gas service which will enable precise control without continuous bleeding.

It is a further object of this invention to provide a control system for natural gas service which enables the jacket to be bled to a reservoir at pressures lower than downstream pipeline pressure without imposing serious storage problems.

According to the invention there is provided a method of operating a pressure-responsive regulator valve in a pipeline, which regulator valve is conditioned to open when upstream pressure therein overcomes pressure in a chamber therein, said method being characterised by the steps of connecting a load line from a source of pressurized fluid to said chamber; connecting a bleed line from said chamber to a zone of low pressure; providing in said bleed and load lines normally closed valves with limited, predetermined flow capacities; operating said valves to open flow through said load line of a measured volume of pressurized fluid to said chamber to enable flow through said regulator valve to achieve a desired flow characteristic value at a selected location in said pipeline and then closing said load line to flow; then monitoring the value of said flow characteristic; and

- 3 -

operating said normally dried valves to enable flow of small, measured volumetric quantities of fluid selectively through one of said load and bleed lines as needed to maintain said desired flow characteristic value.

According to another aspect of the invention there is provided a system for controlling the value of a fluid characteristic in a pipeline, which system includes a regulator valve which is conditioned to open when upstream pressure therein overcomes pressure in a chamber therein, said chamber being connected by a load line to a source of fluid under pressure and by a bleed line to a low pressure zone, said system being characterized in that it includes normally closed feed and bleed control valves, each of predetermined restricted flow capacity, in said load and bleed lines respectively and means for opening said control valves selectively for limited periods.

Since only minute quantities of the chamber fluid are bled from the jacket, a reservoir at pressures lower than downstream pressure may be provided for bleeding purposes. Then, at convenient intervals, the fluid in the reservoir may be pumped into the pipeline.

The invention will be further described, by way of example, with reference to the accompanying drawing, in which:

FIG. 1 is a schematic illustration with flow diagram of a control system embodying this invention; and

FIG. 2 is a partial diagram of another embodiment of this invention.

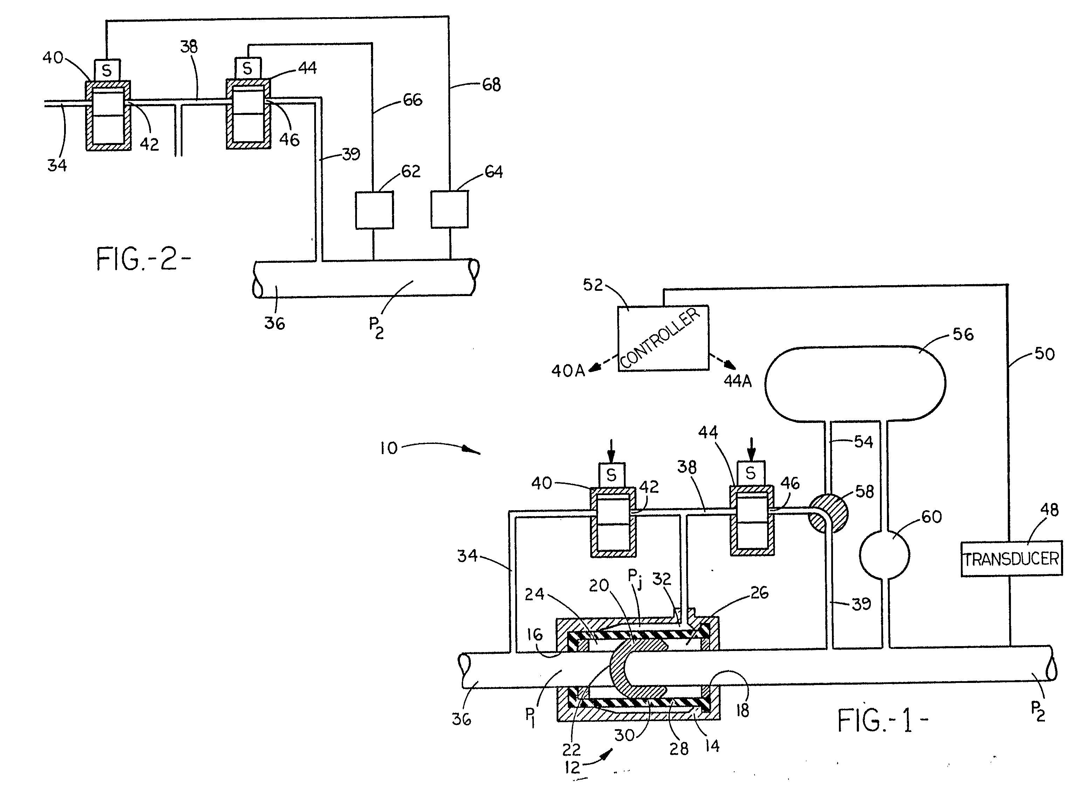

Referring now to FIG. 1 a control system 10 includes as its principal component a control regulator 12, which may, as illustrated, be of the expansible tube type, such as that shown in the specification of U.S. Patent No. 3,306,569. This expansible tube type valve includes a housing 14 with upstream and downstream flow passages 16 and 18. Centered within the housing 14 is a cage or slotted core 20 having a central barrier 22 and upstream and downstream slots 24 and 26, which enable flow around the barrier 22. A flexible expansible sleeve 28, which is sealed at its opposite ends in the housing 14, is stretched around a cylindrical surface 30 to seal off flow around the barrier 22. Flow is enabled when pressure $P_1$ in the upstream flow passage 16 overcomes the pressure $P_j$ in a jacket 32 surrounding the flexible sleeve 28.

The control valve jacket 32 may be loaded to its desired jacket pressure $P_j$ by means of a load line 34 which is connected to a source of pressurized fluid. In the system 10 illustrated, the source of pressure fluid may be the pipeline 36 in which the control valve 12 is installed and in which one or more flow characteristics may be monitored. Also to control the jacket pressure $P_j$ the jacket 32 is connected by means of a bleed line 38 to some zone of low pressure, which could be the pipeline 36 downstream of the control valve 12.

Rather than controlling the jacket pressure $P_j$ by maintaining it in constant communication with a load line, while bleeding continuously through a pilot, as in conventional systems, this system 10 contemplates the control of jacket pressure $P_j$ by feeding or bleeding as necessary, small precise quantities of the jacket fluid. For that purpose, there is provided in the load line 34, a solenoid controlled, on-off, feed control valve 40 having a restricted, precise flow capacity delivery 42.

Similarly, there is installed in the bleed line 38, a solenoid controlled, on-off control valve 44 having a restricted precise flow capacity delivery 46. The solenoid feed and bleed control valves 40 and 44 may be operated selectively or, as indicated, they may be under automatic control.

Connected to the pipeline 36 is a suitable transducer 48 capable of generating an electrical signal in response to the value of a given flow parameter. That is, the electrical signal generated may be proportional to pressure, flow rate or any other parameter to be monitored.

Assuming that the system 10 is installed to monitor pressure $P_2$ at a downstream location in the pipeline 36, the signal so generated may be transmitted at 50 to a suitable controller 52, which translates the signals and transmits signals 40A and 44A to increase or decrease flow through the valve 12 as necessary to achieve the desired downstream pressure $P_2$.

In operation, the feed control valve 40 may be opened at start up to load the jacket 32 at approximately the desired level of jacket pressure $P_j$. Then, the feed and bleed control valves 40 and 44 may be operated precisely as needed to reach the precise jacket pressure level and then both may be closed. This condition can then be maintained until the transducer 48 detects a need for more or less flow through the main control valve 12 in order to again attain the desired downstream pressure $P_2$. In such case, the controller 52 dictates precise increments of flow through the feed line 34 or bleed line 38, as by opening the selected control valve 40 or 44 for a precisely controlled time period, until the desired $P_2$ is reached.

In natural gas service, particularly at high demand periods, the tube tension in the flexible tube 28 may cause a slight obstruction to flow through the valve 12, limiting the response of the valve 12 to the peak demand. In such case, it may be desirable to bleed the jacket 32 through line 54 to a reservoir 56, or the like, which is at a pressure level lower than downstream pipeline pressure, increasing the pressure differential across the flexible sleeve 28 and expanding it out against the jacket wall for maximum flow capacity. The bleed line 54 may replace the line 39 or they may be utilized selectively, as by means of a three-way valve 58. In either case, the reservoir 56 may be emptied periodically by pumping the gas at 60 back into the pipeline 36.

In the embodiment of FIG.2, a pair of on-off pressure switches 62 and 64 are connected directly at 66 and 68 to the feed and bleed control valves 40 and 44, respectively. Each pressure switch 62 and 64 is conditioned to operate over a relatively narrow range of the flow condition being monitored and the ranges should not, of course, overlap. For example, assuming that pressure is the parameter being monitored, the feed control switch 64 is set to energize and open the feed control valve 40 to increase jacket pressure $P_j$ and thereby decrease flow, when $P_2$ reaches the upper limit of a tolerable range and to close that valve when $P_2$ drops to a level intermediate the extremes of that range. Conversely, the pressure switch 62 is set to open bleed control valve 44 to reduce jacket pressure and increase flow when $P_2$ falls to the lower limit of the tolerable range, and to close that valve intermediate the extremes of that range.

Suppose the desired downstream pressure $P_2$ was 32 psi. Then, the switch 64 may be set to energize and open valve 40 when $P_2$ reaches 35 psi and to close again when it falls back to 33 psi, and the switch 62 is set to energize and open valve 44 should $P_2$ fall to 29 psi and close again when $P_2$ is built up to 31 psi. This system provides, then, for no adjustment of flow for pressures between 31 and 33 psi. The exactitude of control desired is weighed against the advantages of infrequent

0057581

- 7 -

control valve operation, in setting the pressure switches 62 and 64 for a narrower or wider band of pressures.

In either embodiment, it has been found that the use of feed and bleed control valves 40 and 44 in place of the conventional diaphragm-operated pilots tend to damp out turbulence and stabilize operation of the expansible tube valve 12. The opening of these valves intermittently for brief periods maintains a relatively uniform jacket pressure $P_j$ despite any turbulence in the pipeline 36.

0057581

- 8 -

<u>CLAIMS</u>

1. A method of operating a pressure-responsive regulator valve (12) in a pipeline (36), which regulator valve is conditioned to open when upstream pressure ($P_1$) therein overcomes pressure ($P_j$) in a chamber (32) therein, said method being characterized by the steps of connecting a load line (34) from a source of pressurized fluid to said chamber; connecting a bleed line (38) from said chamber to a zone of low pressure; providing in said bleed and load lines normally closed valves (40,44) with limited, predetermined flow capacities; operating said valves (40,44) to open flow through said load line of a measured volume of pressurized fluid to said chamber to enable flow through said regulator valve to achieve a desired flow characteristic value at a selected location in said pipeline and then closing said load line to flow; then monitoring the value of said flow characteristic; and operating said normally closed valves (40,44) to enable flow of small, measured volumetric quantities of fluid selectively through one of said load and bleed lines as needed to maintain said desired flow characteristic value.

2. A method according to claim 1, characterized by operating said normally closed valves (40,44) to enable flow of small, measured volumetric quantities of fluid selectively through one of said load and bleed lines as needed to achieve a different value of said flow characteristic.

3. A method according to either preceding claim 1, characterized in that the source of pressurized fluid is the pipeline (36) upstream of the regulator valve (12).

4. A method according to any preceding claim, characterized in that the zone of low pressure is the pipeline (36) downstream of said regulator valve.

5. A method according to any one of claims 1 to 3, characterized in that the zone of low pressure is a reservoir (56) at a pressure lower than any pipeline pressure ($P_2$).

6. A method according to any preceding claim, characterized in that means (48) are provided on said pipeline (36) for sensing the value of said flow characteristic and generating a signal proportional thereto; a signal transmitting controller (52) being operated in response to said sensing means with the normally closed valves being conditioned to operate in response to signals received from said controller.

7. A system for controlling the value of a fluid characteristic in a pipeline (36), which system includes a regulator valve (12) which is conditioned to open when upstream pressure ($P_1$) therein overcomes pressure ($P_j$) in a chamber (32) therein, said chamber being connected by a load line (34) to a source of fluid under pressure and by a bleed line (38) to a low pressure zone, said system being characterized in that it includes normally closed feed and bleed control valves (40,44), each of predetermined restricted flow capacity, in said load and bleed lines (34,38) respectively and means (48,52) for opening said control valves (40,44) selectively for limited periods.

8. A control system according to claim 7, characterized in that said control valves (40,44) are solenoid operated; sensing means (48) are provided for operative connection to the pipeline (36) for generating electrical signals indicative of a fluid characteristic being monitored, means (52) being provided for transmitting said signals to said solenoid valves.

9. A control system according to claim 8, characterized in that said sensing means comprises first

0057581

- 10 -

and second pressure switches (61,64) operative to generate electrical signals in response to, respectively, an increase in pressure above a set maximum and a reduction in pressure below a predetermined minimum; and conductor means (66,68) connecting said first and second pressure switches, respectively, to said bleed and feed control valves (44,40).

10. A control system according to claim 8, characterized in that said sensing means comprises a transducer (48) for generating electrical signals proportionate to the value of a fluid characteristic being monitored; a controller (52) conditioned to be energized by said transducer being provided to transmit signals to the solenoid operated control valves (40,44).

FIG.-2-

FIG.-1-

CONTROLLER

TRANSDUCER

1/1

0057581